# FASCICULE DE BREVET EUROPEEN

(11) **EP 2 599 196 B1**
(45) Date de publication et mention de la délivrance du brevet: **27.01.2016**
(21) Numéro de dépôt: 11741651.1
(22) Date de dépôt: 11.07.2011
(51) Int. Cl.: H02K 21/04

(54) **MACHINE ELECTRIQUE TOURNANTE SYNCHRONE AVEC ROTOR A DOUBLE EXCITATION**
ELEKTRISCHE SYNCHRONROTATIONSMASCHINE MIT ROTOR MIT DOPPELERREGUNG
SYNCHRONOUS ROTARY ELECTRIC MACHINE HAVING A DOUBLE EXCITATION ROTOR

(30) Priorité: 26.10.2010 FR 1058755; 29.07.2010 FR 1056245; 29.07.2010 FR 1056239
(43) Date de publication de la demande: 05.06.2013
(73) Titulaire: Valeo Equipements Electriques Moteur, 94046 Créteil Cedex (FR)
(72) Inventeur: MATT, Jean-Claude, F-21000 Dijon (FR); MIPO, Jean-Claude, F-94000 Creteil (FR); LI, Li, F-78220 Viroflay (FR); FOGGIA, Albert, F-38000 Grenoble (FR)
(86) Numéro de dépôt international: PCT/FR2011/051642
(87) Numéro de publication internationale: WO 2012/013885

(56) Documents cités:
- EP-A1- 0 932 245
- WO-A1-2007/026717
- WO-A1-2009/026767
- WO-A2-2004/017496
- FR-A1- 2 780 580
- AMARA Y ET AL: "A new topology of hybrid synchronous machine", INDUSTRY APPLICATIONS CONFERENCE, 2000. CONFERENCE RECORD OF THE 2000 IEEE, vol. 1, 8 octobre 2000 (2000-10-08), - 12 octobre 2000 (2000-10-12), pages 451-456, XP010521247, ISBN: 978-0-7803-6401-1
- LI LI ET AL: "Some Armature Reaction Compensation Methods Numerical Design of Experiments and Optimization For A Hybrid Excitation Machine", ELECTRIC MACHINES AND DRIVES CONFERENCE, 2009. IEMDC '09. IEEE INTERNATIONAL, 3 mai 2009 (2009-05-03), - 6 mai 2009 (2009-05-06), pages 832-838, XP031475868,

## Description

La présente invention concerne une machine électrique tournante synchrone comprenant un rotor muni d'aimants permanents et d'un bobinage d'excitation. Plus particulièrement, l'invention concerne une machine de ce type pour des applications comme générateur et/ou moteur électrique de traction dans des véhicules automobiles électriques et hybrides.

De par leurs performances accrues en termes de rendement et de puissance massique et volumique, les machines synchrones à aimants permanents trouvent aujourd'hui une large application dans le domaine des véhicules automobiles. De plus, la disponibilité d'aimants permanents aux terres rares à grande échelle et à des conditions économiques acceptables rend viable le choix de ces machines électriques pour les nouvelles générations de véhicules automobiles.

Ces machines électriques sont réalisables dans une large gamme de puissance et de vitesse et trouvent des applications aussi bien dans les véhicules de type « tout électrique » que dans les véhicules à bas CO₂ de types dits « mild-hybrid » et « full-hybrid » (en terminologie anglaise).

Les applications « mild-hybrid » concernent généralement des machines électriques de l'ordre de 8 à 10 KW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance notamment lors des reprises. De plus, une traction à faible vitesse, par exemple en environnement urbain, peut également être assurée par ce même moteur électrique. Les applications de type « full-hybrid» concernent généralement des moteurs de 30 à 50 KW pour des architectures de type série et/ou parallèle avec un niveau d'intégration plus abouti du ou des moteurs électriques dans la chaîne de traction du véhicule.

Cependant, les machines électriques à excitation uniquement par aimants permanents présentent des difficultés de défluxage. Hors, dans un véhicule automobile, lorsque la machine électrique est utilisée comme moteur de traction sur différentes missions de circulation du véhicule, celle-ci doit pouvoir fonctionner à des régimes de charge et de vitesse variables et doit donc être défluxable pour atteindre la zone des hautes vitesses.

Les machines à double excitation sont plus facilement défluxable et offrent la possibilité de combiner dans leur rotor une densité d'énergie élevée apportée par les aimants permanents et une capacité à contrôler le flux magnétique dans l'entrefer apportée par la bobine d'excitation.

Une structure intéressante de machine à double excitation est divulguée dans l'article de Li Li et al. intitulé «Some armature reaction compensation methods, numerical design of experiments and optimization for a hybrid excitation machine » et publié dans IEMDC, Miami, USA (2009).

Le document WO 2007/026717 décrit une machine à rotor à double excitation.

La présente invention propose des machines électriques tournantes synchrones à double excitation avec une topologie de rotor du type de celle divulguée dans l'article ci-dessus et dont la conception a été optimisée afin d'accroître les performances et l'intérêt de ces machines pour l'industrie automobile.

Selon un premier aspect, la présente invention concerne une machine électrique tournante à double excitation comprenant un stator muni de bobinages statoriques et un rotor comprenant une pluralité de pôles Nord et pôles Sud alternés qui sont formés à partir d'une pluralité d'aimants permanents et d'une pluralité de bobines d'excitation. Les aimants permanents sont logés dans des premiers évidements respectifs se prolongeant axialement et répartis régulièrement dans une partie circonférentielle de la masse magnétique du rotor de manière à définir une pluralité de sections polaires circonférentielles. Les bobines d'excitation sont logées dans des seconds évidements respectifs se prolongeant axialement et répartis régulièrement dans une partie intermédiaire de la masse magnétique du rotor, la partie intermédiaire étant située entre la partie circonférentielle et une partie centrale du rotor. Chaque bobine d'excitation est insérée dans une dent polaire radiale respective formant cloison entre deux seconds évidements consécutifs, chaque dent polaire étant sensiblement alignée sur un axe radial central du pôle correspondant.

Conformément à l'invention, au moins une section polaire circonférentielle comprend un troisième évidement sensiblement aligné sur l'axe radial central et ayant une largeur maximum au niveau d'un sommet de celui-ci et une largeur minimum au niveau d'un pied de celui-ci, le pied étant l'extrémité du troisième évidement la plus proche d'une partie centrale du rotor, et le rapport de la largeur maximum du troisième évidement sur une largeur de pôle de la section polaire circonférentielle a une valeur comprise entre environ 0,13 et environ 0,44.

Selon une autre caractéristique particulière, la largeur maximum du troisième évidement a une valeur comprise entre environ 2 mm et environ 10 mm.

De préférence, pour l'obtention de l'effet combiné d'une augmentation du couple et d'une réduction de l'inertie, le rapport de la largeur maximum du troisième évidement sur une largeur de pôle de la section polaire circonférentielle a une valeur comprise entre environ 0,22 et environ 0,29 et ladite largeur maximum du troisième évidement a une valeur comprise entre environ 4 mm et environ 6,5 mm.

Selon une autre caractéristique particulière de l'invention, la largeur minimum du troisième évidement est comprise entre environ 0,8 fois une largeur d'entrefer minimum de la machine et environ 1,2 fois la largeur d'entrefer minimum.

Selon encore une autre caractéristique particulière de l'invention, la section polaire circonférentielle comprenant le troisième évidement comprend, entre le sommet du troisième évidement et une face polaire extérieure, une portion de masse magnétique formant pont ayant une hauteur comprise entre environ 0,7 mm et environ 2 mm.

Selon une forme de réalisation particulière de l'invention, le troisième évidement se prolonge dans la dent polaire. Par exemple, le troisième évidement peut se prolonger sensiblement sur toute la hauteur de la dent polaire. Le troisième évidement pourra avantageusement être réalisé sous une forme évasée

Selon encore une autre caractéristique particulière de l'invention, un rapport de la largeur de dent polaire sur la hauteur d'aimant permanent est compris entre environ 0,65 et environ 1.

La machine électrique tournante selon l'invention peut avantageusement être réalisée sous la forme d'un moteur électrique, d'une génératrice ou d'un moteur/ génératrice pour véhicule automobile.

D'autres caractéristiques et avantages de l'invention ressortiront à la lecture de la description suivante de plusieurs formes de réalisation particulières, en référence aux figures ci-dessous, dans lesquelles :
- la Fig.1 est une vue en coupe montrant, de manière simplifiée, la structure d'une forme de réalisation particulière d'une machine électrique tournante à double excitation selon l'invention;
- les Figs.2A et 2B sont des vues partielles en coupe du rotor de la machine montrant le fonctionnement de la double excitation;
- les Figs.3A, 3B et 3C sont des vues partielles en coupe du rotor de la machine montrant deux formes de réalisation différentes et des paramètres dimmensionnant, pour un évidement de forme sensiblement évasée réalisé dans une partie circonférentielle de la masse magnétique du rotor;
- la Fig.4 montre des courbes de couple C et d'inertie I en fonction d'une largeur maximum Lh d'évidement et d'une largeur Ln de dent polaire;
- la Fig.5 est une vue partielle en coupe du rotor de la machine dans laquelle sont définies la largeur Ln des dents polaires et une hauteur Hm des aimants permanents ; et
- la Fig.6 est une courbe de puissance de la machine en fonction d'un rapport Ln/Hm de la largeur de dent polaire sur la hauteur d'aimant permanent.

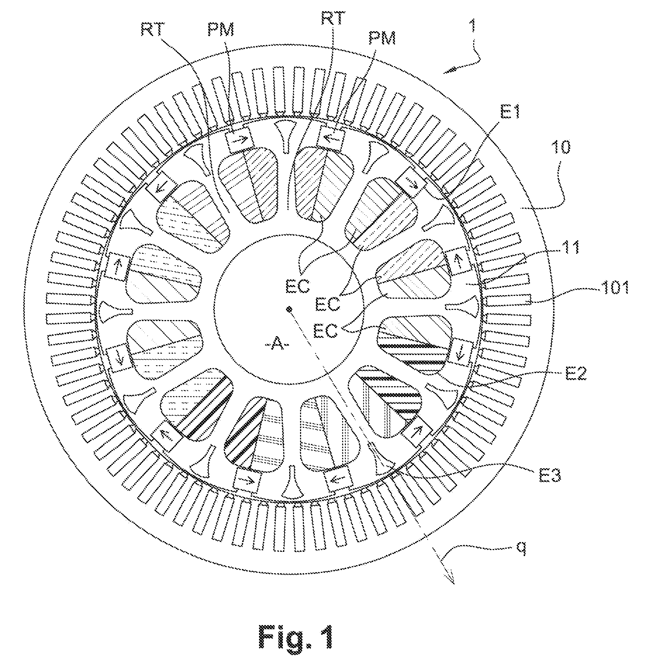

La Fig.1 montre la structure d'une forme de réalisation particulière 1 d'une machine électrique tournante à double excitation selon l'invention qui comprend un stator 10 et un rotor 11. Le rotor 11 de la machine 1 comprend une pluralité de pôles saillants, Nord et Sud alternés, qui sont formés à partir d'une pluralité d'aimants permanents PM et d'une pluralité de bobines d'excitation EC.

Une réalisation concrète d'une telle machine selon l'invention est par exemple un moteur/génératrice de 8 à 10 KW pour des applications dans des véhicules automobiles du type dits «mild-hybrid». Dans son mode de fonctionnement en moteur, une telle machine peut être conçue pour le démarrage du moteur thermique, l'assistance en couple du moteur thermique ainsi que pour la traction électrique à faible vitesse du véhicule. Dans son mode de fonctionnement en génératrice, la machine peut fonctionner dans un mode alternateur normal ou dans un mode de freinage récupératif.

Une forme de réalisation particulière de cette machine comprend un stator 10 ayant 72 encoches 101 et un rotor 11 comportant 12 pôles Nord et Sud alternés. Le rotor 11 a un diamètre de l'ordre 100 mm et une longueur axiale de l'ordre de 50 mm. Le rotor 11 comporte 12 aimants permanents PM ayant une forme sensiblement rectangulaire et pour dimensions : longueur x hauteur x largeur = 50 mm x 5 mm x 6 mm.

Le stator 10 et le rotor 11 sont réalisés de manière classique avec des paquets de tôles métalliques formant des masses magnétiques.

Les encoches 101 du stator 10 sont prévues pour recevoir des bobinages statoriques (non représentés) et forment entre elles une pluralité de dents statoriques. Selon les formes de réalisation, les encoches 101 seront prévues pour loger des bobinages concentrés, bobinés sur des grosses dents, ou bien des bobinages distribués.

Le rotor 11 a la forme générale d'un cylindre multilobé, chacun des lobes correspondant à un pôle magnétique du rotor.

Les aimants PM sont disposés de manière enterrée dans la partie circonférentielle du rotor 11 et se prolongent axialement sur toute la longueur du rotor 11. Les aimants PM sont logés dans des évidements E1 respectifs et sont répartis dans la partie circonférentielle du rotor 11 de telle manière que deux aimants PM consécutifs, dans le sens de la circonférence, sont disposés avec des orientations polaires différentes, comme cela apparaît à la Fig.1. Par exemple, si PM1 et PM2 sont des aimants consécutifs, les orientations polaires respectives pourront être N-S et S-N ou bien S-N et N-S, toujours dans un même sens circonférentiel.

Les aimants PM sont de préférence des aimants permanents comprenant des terres rares tels que des aimants de type Néodyme-Fer-Bore (NeFeB), Samarium-Fer (SmFe), Samarium-Cobalt (SmCo) ou bien des aimants obtenus à partir de ferrites frittés ou liés.

Le rotor 11 comprend un alésage central débouchant à ses deux extrémités faciales et destiné à recevoir son arbre d'entraînement A. On notera que dans la présente invention l'arbre A pourra être réalisé dans un matériau magnétique.

Outre les évidements E1 contenant les aimants PM, le rotor 11 comprend également des évidements E2 et E3 qui se répètent pour chaque pôle et s'étendent axialement sur sensiblement toute la longueur du rotor.

Les évidements E2 sont prévus pour loger des bobines d'excitation EC dans le rotor 11. Les évidements E2 sont situés sous les aimants PM, avec autant d'évidement E2 que d'aimants PM. Deux évidements E2 consécutifs sont séparés par une cloison radiale formant dent polaire RT autour de laquelle est enroulée une bobine d'excitation EC correspondante. Les bobines d'excitation EC peuvent être reliées électriquement selon des montages série, parallèle ou série/parallèle.

Les évidements E3 remplissent plusieurs fonctions. De manière générale, ils ont essentiellement pour fonction de contribuer au contrôle du flux magnétique et de réduire l'inertie du rotor. Selon les applications, les évidements E3 devront être optimisés par des simulations sur les lignes de champ magnétique de manière à trouver le meilleur compromis possible entre une inertie minimale du rotor et un couple mécanique maximal délivré par la machine en mode moteur. Les évidements E3 pourront également être optimisés de manière à améliorer le comportement de la machine vis-à-vis de la réaction magnétique d'induit.

On notera que certains évidements E2 pourront avantageusement être utilisés pour des tirants d'assemblage du rotor 11.

Dans cette forme de réalisation, les évidements E3 contiennent de l'air. Dans certaines applications, ils pourront être remplis avec des matériaux amagnétiques, voire magnétiques mais avec une faible densité. Les évidements E3 sont aménagés ici de manière sensiblement radiale dans le rotor 11, entre deux aimants PM consécutifs et alignés sur un axe radial central du pôle, axe désigné conventionnellement « axe q ».

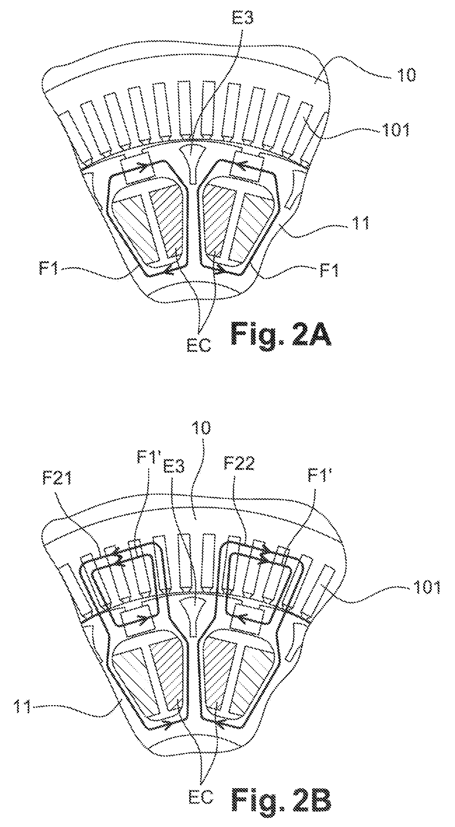

En référence aux Figs.2A et 2B, le fonctionnement de la double excitation au niveau d'un pôle du rotor 11 est maintenant décrit, sachant que ce fonctionnement est identique pour tous les pôles du rotor 11.

La Fig.2A montre le cas où la bobine d'excitation EC n'est pas excitée, ce qui signifie qu'elle n'est traversée par aucun courant d'excitation. Comme montré à la Fig.2A, des flux magnétiques F1 générés par les aimants permanents PM bouclent alors à travers la masse magnétique du rotor 11. La réluctance des circuits magnétiques du rotor 11 doit bien entendu être déterminée de manière à éviter toute démagnétisation des aimants permanents PM. Dans ce mode de fonctionnement, compte tenu que les flux magnétiques F1 ne traversent pas le stator 10, il en découle qu'aucune force électromotrice (f.e.m) n'est produite dans les bobinages statoriques.

La Fig.2B montre le cas où la bobine d'excitation EC est excitée, ce qui signifie qu'elle est traversée par un courant d'excitation. La représentation schématique de la Fig.2B correspond au cas où le courant d'excitation traversant la bobine EC a une intensité telle que les flux magnétiques générés par les aimants PM sont contraints en totalité à circuler à travers le stator 10 (flux magnétiques F1'). Le courant d'excitation traversant la bobine EC provoque l'apparition d'un flux magnétique supplémentaire au niveau de la dent polaire RT correspondante. Ce flux supplémentaire se subdivise en deux parties F21 et F22 qui passent de part et d'autre de l'évidement E3 et circulent ensuite dans le stator 10. Comme cela apparaît à la Fig.2B, le bouclage des flux F21 et F22 vers la dent polaire RT concernée se fait à travers les dents polaires RT voisines, situées de part et d'autre de celle concernée.

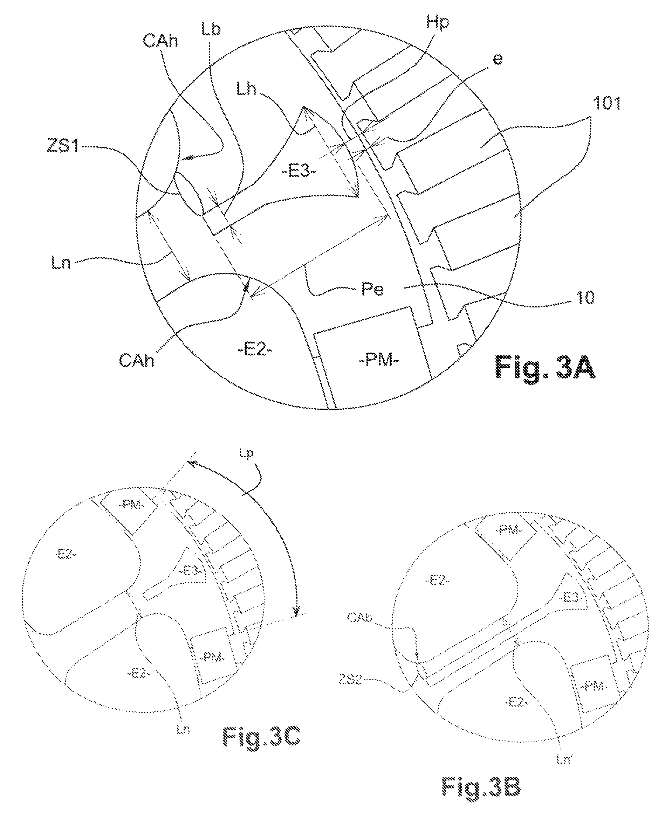

En référence aux Figs.3A, 3B et 3C l'évidement E3 est maintenant décrit de manière plus détaillé.

Comme cela apparaît dans les Figs.3A, 3B et 3C, dans cette forme de réalisation, l'évidement E3 a une forme sensiblement évasée. La partie évasée est située dans la partie circonférentielle du rotor 11.

Bien entendu, des formes autres que cette forme évasée sont possibles pour l'évidement E3 et restent dans la portée de la présente invention, la forme évasée décrite ici n'étant donnée qu'à titre d'exemple de réalisation.

Les paramètres ci-dessous doivent être pris en compte pour définir l'évidement E3, à savoir :
- Lb qui est la largeur minimum de l'évidement E3 au niveau d'un pied de celui-ci;
- Hp qui est la hauteur de tôle restante entre le sommet de l'évidement E3 et la face extérieure du pôle correspondant, hauteur Hp désignée « hauteur de pont » ci-dessous;
- Pe qui est la profondeur de l'évidement E3;
- Lh qui est la largeur maximum de l'évidement E3 au niveau d'un sommet de celui-ci;
- Ln qui est la largeur de la dent polaire RT ; et
- Lp qui est la largeur du pôle, mesurée sur la circonférence extérieure du rotor 11.

Les simulations et essais effectués par l'entité inventive ont montré que le paramètre de largeur minimum d'évidement Lb doit être déterminé en fonction de la largeur d'entrefer entre le rotor 11 et le stator 10. Dans les formes de réalisation décrites ici, l'entrefer entre le rotor 11 et le stator 10 est variable du fait de la structure multi-lobée du rotor 11. La largeur d'entrefer e (montrée à la Fig.3A) est la largeur minimale de l'entrefer, c'est-à-dire, la largeur d'entrefer au niveau de l'axe q. On notera ici que la variabilité de l'entrefer contribue à une réduction des harmoniques et donc des pertes fer.

L'entité inventive a mis en évidence que la largeur minimum d'évidement Lb doit rester sensiblement équivalente à la largeur d'entrefer e. En effet, une largeur Lb trop élevée conduit à une saturation magnétique du pôle et, consécutivement, à une réduction du couple mécanique. De préférence, la largeur minimum d'évidement Lb doit être comprise entre environ 0,8 fois la largeur d'entrefer e (0,8 x e) et environ 1,2 fois la largeur d'entrefer e (1,2 x e).

La hauteur de pont Hp doit être minimisée pour obtenir une saturation magnétique qui, en faisant obstacle au flux magnétique suivant l'axe q, entraîne une augmentation du couple. La réduction de la hauteur Hp est également favorable à une réduction sensible de l'inertie. Compte-tenu que l'inertie est proportionnelle au carré du rayon, tout retrait de masse le plus loin possible du centre du rotor est très favorable à la réduction de l'inertie. Cependant, cette hauteur de pont Hp doit être dimensionnée de telle manière que le pont puisse résister aux contraintes mécaniques auxquelles est soumis le rotor, notamment la force centrifuge. La hauteur de pont Hp ne peut donc être inférieure à une valeur minimale qui est imposée par ces contraintes mécaniques. Les essais réalisés par l'entité inventive ont montrés qu'une largeur de pont Hp comprise entre environ 0,7 mm et environ 2 mm est un bon compromis.

Concernant la profondeur Pe de l'évidement E3, les Figs.3A, 3C et 3B montrent deux formes de réalisation possible.

Dans la forme de réalisation des Figs.3A, 3C, le bas du pied de l'évidement E3 se situe au niveau d'un coin arrondi haut CAh de l'évidement E2. Dans certaines applications, des zones de saturation ZS1 entre le bas du pied de l'évidement E3 et le coin arrondi haut CAh de l'évidement E2 pourront être dimmensionnées de manière à contrôler le flux magnétique.

Dans la forme de réalisation de la Fig.3B, l'évidement E3 se prolonge sensiblement sur toute la hauteur de la dent polaire RT. Le bas du pied de l'évidement E3 se situe au niveau d'un coin arrondi bas CAb de l'évidement E2. De manière analogue à la forme de réalisation des Figs.3A, 3C, des zones de saturation ZS2 entre le bas du pied de l'évidement E3 et le coin arrondi haut CAb de l'évidement E2 pourront être dimmensionnées afin de contrôler le flux magnétique. On notera ici que la largeur Ln' de la dent polaire RT sera plus importante que celle Ln de la forme de réalisation des Figs.3A, 3C afin de conserver la même largeur de masse magnétique pour la dent RT.

Conformément à l'invention, la largeur maximum Lh de l'évidement E3 est dimensionnée en fonction de Lp qui est la largeur du pôle mesurée sur la circonférence extérieure du rotor 11 (comme montré à la Fig.3C), de telle manière à optimiser le compromis inertie / couple.

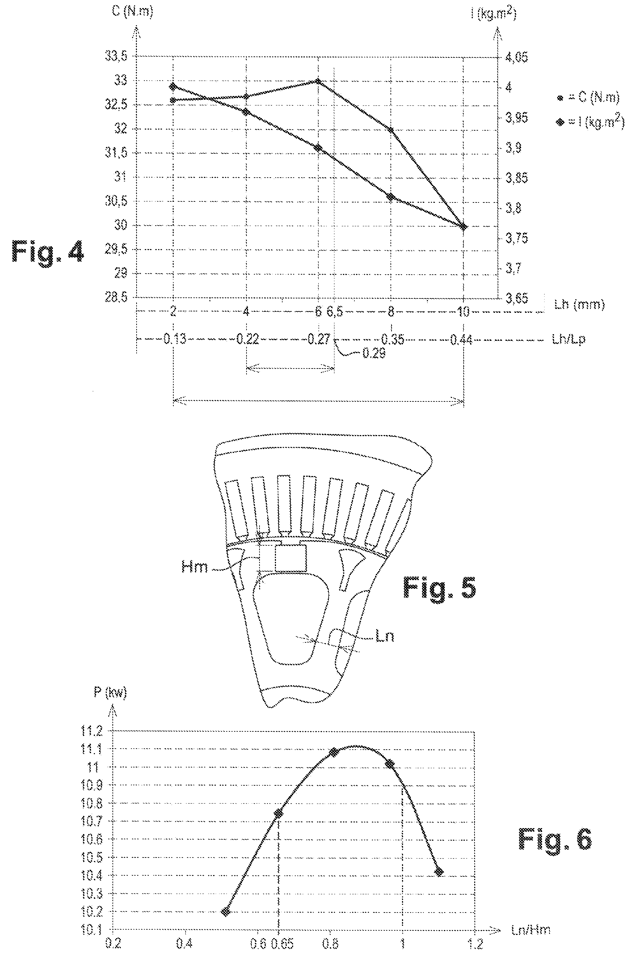

A la Fig.4, il est montré des courbes de couple C et d'inertie I en fonction du rapport Lh/Lp et de la largeur maximum d'évidement Lh. La courbe de couple est représentée avec des points en forme de rond. La courbe d'inertie est représentée avec des points en forme de losange.

De l'étude de ces courbes, il ressort qu'un bon compromis entre l'inertie et le couple peut être trouvé pour des valeurs de Lh/Lp comprises environ 0,13 et environ 0,44. Des valeurs Lh comprises entre environ 2 et environ 10 mm donnent de bons résultats. On notera que pour des valeurs de Lh/Lp et Lh comprises respectivement entre 0,22 et 0,29 et entre 4 et 6,5 mm, il est possible à la fois de réduire l'inertie et d'augmenter le couple. Compte tenu de l'enseignement apporté ci-dessus par l'entité inventive, l'homme du métier choisira dans les intervalles données les valeurs Lh/Lp et Lh les mieux adaptées à l'application envisagée.

En référence aux Figs.6 et 7, il est maintenant traité d'une optimisation proposée par l'entité inventive du rapport entre la largeur Ln des dents polaires RT et la hauteur Hm des aimants permanents PM. Les essais et simulation réalisés par l'entité inventive ont montré qu'il s'agit là d'un point critique dans le dimensionnement de la machine, qui a une influence sensible sur la puissance de celle-ci.

Un compromis doit être trouvé entre le pourcentage de flux magnétique produit par les aimants permanents et celui produit par le bobinage d'excitation, en d'autres termes, entre les aimants permanents et la quantité du cuivre intégré dans le rotor. Le paramètre Hm est ici représentatif du flux magnétique produit par les aimants. Le paramètre Ln est lié à la quantité de cuivre dans le rotor et donc au flux magnétique produit par la bobine d'excitation. En effet, selon la largeur Ln des dents polaires, il sera possible d'inclure plus ou moins de cuivre dans les évidements E2. De plus, la largeur Ln est à dimensionner avec soins de manière à éviter, d'une part, une sollicitation insuffisance de la masse magnétique de la dent polaire RT avec un point de fonctionnement du circuit magnétique qui est trop éloigné de la saturation magnétique et, d'autre part, une saturation excessive de la masse magnétique de la dent polaire RT qui limiterait le passage du flux magnétique généré par la bobine d'excitation.

La courbe de la Fig.7, relevée par l'entité inventive, donne la puissance P de la machine en fonction de la valeur du rapport Ln/Hm. Un rapport Ln/Hm compris entre environ 0,65 et environ 1 s'avère être un bon compromis et garantit les performances de la machine.

## Revendications

1. Machine électrique tournante à double excitation comprenant un stator (10) muni de bobinages statoriques et un rotor (11) comprenant une pluralité de pôles Nord et pôles Sud alternés qui sont formés à partir d'une pluralité d'aimants permanents (PM) et d'une pluralité de bobines d'excitation (EC),
lesdits aimants permanents (PM) étant logés dans des premiers évidements respectifs (E1) se prolongeant axialement et répartis régulièrement dans une partie circonférentielle de la masse magnétique dudit rotor (11) de manière à définir une pluralité de sections polaires circonférentielles,
lesdites bobines d'excitation (EC) étant logées dans des seconds évidements respectifs (E2) se prolongeant axialement et répartis régulièrement dans une partie intermédiaire de la masse magnétique dudit rotor (11), ladite partie intermédiaire étant située entre ladite partie circonférentielle et une partie centrale (A) dudit rotor (11), chaque dite bobine d'excitation (EC) étant insérée dans une dent polaire radiale respective (RT) formant cloison entre deux dits seconds évidements (E2) consécutifs, chaque dent polaire (RT) étant sensiblement alignée sur un axe radial central (q) du pôle correspondant,
**caractérisée en ce qu**'au moins une dite section polaire circonférentielle comprend un troisième évidement (E3) a aménagé de manière radiale dans ledit rotor (11) et aligné sur ledit axe radial central (q), et ayant une forme sensiblement évasée avec une largeur maximum (Lh) au niveau d'un sommet de celui-ci et une largeur minimum (Lb) au niveau d'un pied de celui-ci, ledit pied étant l'extrémité du troisième évidement (E3) la plus proche d'une partie centrale (A) dudit rotor, et le rapport (Lh/Lp) de ladite largeur maximum (Lh) dudit troisième évidement (E3) sur une largeur de pôle (Lp) de ladite section polaire circonférentielle a une valeur comprise entre environ 0,13 et environ 0,44.

2. Machine électrique tournante selon la revendication 1, **caractérisée en ce que** ladite largeur maximum (Lh) dudit troisième évidement (E3) a une valeur comprise entre environ 2 mm et environ 10 mm.

3. Machine électrique tournante selon la revendication 2, **caractérisée en ce que** ledit rapport (Lh/Lp) de ladite largeur maximum (Lh) dudit troisième évidement (E3) sur une largeur de pôle (Lp) de ladite section polaire circonférentielle a une valeur comprise entre environ 0,22 et environ 0,29 et ladite largeur maximum (Lh) dudit troisième évidement (E3) a une valeur comprise entre environ 4 mm et environ 6,5 mm.

4. Machine électrique tournante selon l'une quelconque des revendications 1 à 3, **caractérisée en ce que** ladite largeur minimum (Lb) dudit troisième évidement (E3) est comprise entre environ 0,8 fois une largeur d'entrefer minimum (e) de la machine et environ 1,2 fois ladite largeur d'entrefer minimum.

5. Machine électrique tournante selon l'une quelconque des revendications 1 à 4, **caractérisée en ce que** ladite section polaire circonférentielle comprenant ledit troisième évidement (E3) comprend, entre ledit sommet dudit troisième évidement (E3) et une face polaire extérieure, une portion de masse magnétique formant pont ayant une hauteur (Hp) comprise entre environ 0,7 mm et environ 2 mm.

6. Machine électrique tournante selon l'une quelconque des revendications 1 à 5, **caractérisée en ce que** ledit troisième évidement (E3) se prolonge dans ladite dent polaire (RT).

7. Machine électrique tournante selon la revendication 6, **caractérisée en ce que** ledit troisième évidement (E3) se prolonge sensiblement sur toute la hauteur de ladite dent polaire (RT).

8. Machine électrique tournante selon l'une quelconque des revendications 1 à 7, **caractérisée en ce que** ledit troisième évidement (E3) a une forme évasée

9. Machine électrique tournante selon l'une quelconque des revendications 1 à 8, **caractérisée en ce qu**'un rapport (Ln/Hm) de la largeur de dent polaire (Ln) sur la hauteur d'aimant permanent (Hm) est compris entre environ 0,65 et environ 1.

10. Machine électrique tournante selon l'une quelconque des revendications 1 à 9, **caractérisée en ce qu**'elle est réalisée sous la forme d'un moteur électrique pour véhicule automobile.

11. Machine électrique tournante selon l'une quelconque des revendications 1 à 10, **caractérisée en ce qu**'elle est réalisée sous la forme d'une génératrice électrique ou d'un moteur/génératrice pour véhicule automobile.

## Patentansprüche

1. Drehende elektrische Maschine mit doppelter Erregung, die einen mit Statorwicklungen versehenen Stator (10) und einen Rotor (11), der mehrere abwechselnde Nord- und Südpole aufweist, die anhand mehrerer Permanentmagneten (PM) und mehrerer Erregungsspulen (EC) gebildet sind, umfasst,
wobei sich die Permanentmagneten (PM) in jeweiligen ersten Aussparungen (E1) befinden und axial verlängert sind und in einem Umfangsteil der magnetischen Masse des Rotors (11) regelmäßig verteilt sind, derart, dass in Umfangsrichtung mehrere polare Abschnitte definiert sind,
wobei sich die Erregungsspulen (EC) in jeweiligen zweiten Aussparungen (E2) befinden und axial verlängert sind und in einem Zwischenteil der magnetischen Masse des Rotors (11) regelmäßig verteilt sind, wobei sich der Zwischenteil zwischen dem Umfangsteil und einem Mittelteil (A) des Rotors (11) befindet, wobei jede Erregungsspule (EC) in einen jeweiligen radialen polaren Zahn (RT), der zwischen zwei aufeinanderfolgenden zweiten Aussparungen (E2) eine Trennwand bildet, eingesetzt ist, wobei jeder polare Zahn (RT) im Wesentlichen auf eine mittige radiale Achse (q) des entsprechenden Pols ausgerichtet ist,
**dadurch gekennzeichnet, dass** wenigstens ein polarer Abschnitt in Umfangsrichtung eine dritte Aussparung (E3) umfasst, die in dem Rotor (11) radial ausgebildet ist und auf die mittige radiale Achse (q) ausgerichtet ist und eine im Wesentlichen aufgeweitete Form mit einer maximalen Breite (Lh) auf Höhe ihres höchsten Punkts und mit einer minimalen Breite (Lb) auf Höhe ihres Fußes besitzt, wobei der Fuß das Ende der dritten Aussparung (E3) ist, das sich am nächsten bei einem mittigen Teil (A) des Rotors befindet, und das Verhältnis (Lh/Lp) der maximalen Breite (Lh) der dritten Aussparung (E3) zu der Breite (Lp) des Pols des polaren Abschnitts in Umfangsrichtung einen Wert im Bereich von etwa 0,13 bis etwa 0,44 besitzt.

2. Drehende elektrische Maschine nach Anspruch 1, **dadurch gekennzeichnet, dass** die maximale Breite (Lh) der dritten Aussparung (E3) einen Wert im Bereich von etwa 2 mm bis etwa 10 mm besitzt.

3. Drehende elektrische Maschine nach Anspruch 2, **dadurch gekennzeichnet, dass** das Verhältnis (Lh/Lp) der maximalen Breite (Lh) der dritten Aussparung (E3) zu der Breite (Lp) des Pols des polaren Abschnitts in Umfangsrichtung einen Wert im Bereich von etwa 0,22 bis etwa 0,29 besitzt und die maximale Breite (Lh) der dritten Aussparung (E3) einen Wert im Bereich von etwa 4 mm bis etwa 6,5 mm besitzt.

4. Drehende elektrische Maschine nach einem der Ansprüche 1 bis 3, **dadurch gekennzeichnet, dass** die minimale Breite (Lb) der dritten Aussparung (E3) im Bereich von etwa der 0,8-fachen Breite des minimalen Luftspalts (d) der Maschine bis zu etwa der 1,2-fachen Breite des minimalen Luftspalts liegt.

5. Drehende elektrische Maschine nach einem der Ansprüche 1 bis 4, **dadurch gekennzeichnet, dass** der polare Abschnitt in Umfangsrichtung, der die dritte Aussparung (E3) aufweist, zwischen dem höchsten Punkt der dritten Aussparung (E3) und der äußeren Polfläche einen Abschnitt der magnetischen Masse umfasst, der eine Brücke bildet, die eine Höhe (Hp) im Bereich von etwa 0,7 mm bis etwa 2 mm besitzt.

6. Drehende elektrische Maschinen nach einem der Ansprüche 1 bis 5, **dadurch gekennzeichnet, dass** die dritte Aussparung (E3) in den polaren Zahn (RT) verlängert ist.

7. Drehende elektrische Maschine nach Anspruch 6, **dadurch gekennzeichnet, dass** die dritte Aussparung (E3) im Wesentlichen über die gesamte Höhe des polaren Zahns (RT) verlängert ist.

8. Drehende elektrische Maschine nach einem der Ansprüche 1 bis 7, **dadurch gekennzeichnet, dass** die dritte Aussparung (E3) eine aufgeweitete Form besitzt.

9. Drehende elektrische Maschine nach einem der Ansprüche 1 bis 8, **dadurch gekennzeichnet, dass** ein Verhältnis (Ln/Hm) der Breite des polaren Zahns (Ln) zu der Höhe des Permanentmagneten (Hm) im Bereich von etwa 0,65 bis etwa 1 liegt.

10. Drehende elektrische Maschine nach einem der Ansprüche 1 bis 9, **dadurch gekennzeichnet, dass** sie in Form eines Elektromotors für ein Kraftfahrzeug verwirklicht ist.

11. Drehende elektrische Maschine nach einem der Ansprüche 1 bis 10, **dadurch gekennzeichnet, dass** sie in Form eines elektrischen Generators oder eines Motors/Generators für ein Kraftfahrzeug verwirklicht ist.

## Claims

1. Hybrid-excitation rotary electric machine comprising a stator (10) provided with stator windings and a rotor (11) comprising a plurality of alternating north poles and south poles which are formed from a plurality of permanent magnets (PM) and from a plurality of excitation coils (EC),
the said permanent magnets (PM) being housed in first respective recesses (E1) extending axially and distributed regularly in a circumferential part of the magnetic mass of the said rotor (11) so as to define a plurality of circumferential polar sections,
the said excitation coils (EC) being housed in second respective recesses (E2) extending axially and distributed regularly in an intermediate part of the magnetic mass of the said rotor (11), the said intermediate part being situated between the said circumferential part and a central part (A) of the said rotor (11), each said excitation coil (EC) being inserted into a respective radial polar tooth (RT) forming a partition between two said second consecutive recesses (E2), each polar tooth (RT) being substantially aligned with a central radial axis (q) of the corresponding pole,
**characterized in that** at least one said circumferential polar section comprises a third recess (E3) formed in a radial manner in the said rotor (11) and aligned with the said central radial axis (q), and having a substantially flared shape with a maximum width (Lh) at a top of this recess and a minimum width (Lb) at a foot of this recess, the said foot being the end of the third recess (E3) closest to a central part (A) of the said rotor, ratio (Lh/Lp) of the said maximum width (Lh) of the said third recess (E3) to a pole width (Lp) of the said circumferential polar section has a value between about 0.13 and about 0.44.

2. Rotary electric machine according to Claim 1, **characterized in that** the said maximum width (Lh) of the said third recess (E3) has a value between about 2 mm and about 10 mm.

3. Rotary electric machine according to Claim 2, **characterized in that** the said ratio (Lh/Lp) of the said maximum width (Lh) of the said third recess (E3) to a pole width (Lp) of the said circumferential polar section has a value between about 0.22 and about 0.29 and the said maximum width (Lh) of the said third recess (E3) has a value between about 4 mm and about 6.5 mm.

4. Rotary electric machine according to any one of Claims 1 to 3, **characterized in that** the said minimum width (Lb) of the said third recess (E3) is between about 0.8 times a minimum air-gap width (e) of the machine and about 1.2 times the said minimum air-gap width.

5. Rotary electric machine according to any one of Claims 1 to 4, **characterized in that** the said circumferential polar section comprising the said third recess (E3) comprises, between the said top of the said third recess (E3) and an outer polar face, a magnetic mass portion forming a bridge having a height (Hp) between about 0.7 mm and about 2 mm.

6. Rotary electric machine according to any one of Claims 1 to 5, **characterized in that** the said third recess (E3) extends in the said polar tooth (RT).

7. Rotary electric machine according to Claim 6, **characterized in that** the said third recess (E3) extends substantially over the entire height of the said polar tooth (RT).

8. Rotary electric machine according to any one of Claims 1 to 7, **characterized in that** the said third recess (E3) has a flared shape.

9. Rotary electric machine according to any one of Claims 1 to 8, **characterized in that** a ratio (Ln/Hm) of the polar tooth width (Ln) to the permanent magnet height (Hm) is between about 0.65 and about 1.

10. Rotary electric machine according to any one of Claims 1 to 9, **characterized in that** it is implemented in the form of an electric motor for a motor vehicle.

11. Rotary electric machine according to any one of Claims 1 to 10, **characterized in that** it is implemented in the form of an electric generator or of a motor/generator for a motor vehicle.
